# FASCICULE DE BREVET EUROPEEN

(11) **EP 3 729 150 B1**
(45) Date de publication et mention de la délivrance du brevet: **05.08.2026**
(21) Numéro de dépôt: 18826430.3
(22) Date de dépôt: 05.12.2018
(51) Int. Cl.: G02B 6/02, G02B 6/14, G02B 6/28

(54) **MODES SPATIAUX MULTIMODAUX AUGMENTÉS POUR FIBRE OPTIQUE**
ERWEITERTE MULTIMODALE RÄUMLICHE GLASFASERMODEN
AUGMENTED MULTIMODAL SPATIAL OPTICAL-FIBRE MODES

(30) Priorité: 21.12.2017 FR 1762840
(43) Date de publication de la demande: 28.10.2020
(73) Titulaire: Orange, 92130 Issy-les-Moulineaux (FR)
(72) Inventeur: CHANCLOU, Philippe, 92326 Châtillon Cedex (FR)
(86) Numéro de dépôt international: PCT/FR2018/053123
(87) Numéro de publication internationale: WO 2019/122569

(56) Documents cités:
- US-A1- 2009 080 470
- US-A1- 2014 186 040
- US-A1- 2015 098 697
- US-A1- 2017 299 900
- US-B2- 8 270 786

## Description

### 1. Domaine de l'invention

L'invention se situe dans le domaine de la propagation de modes optiques dans une fibre optique.

### 2. Etat de la technique antérieure

La capacité de transmission des systèmes de communication optique utilisant des fibres monomodes dites SMF (single mode fiber) est limitée à environ 100Tbit/s en raison des limites physiques de la transmission.

Le multiplexage par division spatiale dite SDM (space division multiplexing), réalisé par des fibres multi-cœurs dites MCF (multi core fiber) et des fibres faiblement multimodales dites FMF (few mode fiber), surmonte cette limite en capacité des systèmes de communication optiques actuels basés en grande partie sur des fibres SMF. Une fibre MCF possède plusieurs cœurs. Une fibre FMF prend en charge plusieurs modes de transmission dans un seul cœur. Dans les deux cas, plusieurs modes de propagation sont transmis en même temps en parallèle sur la même fibre, chaque mode constituant un canal de transmission.

L'inconvénient majeur de la technologie SDM est qu'elle nécessite de remplacer la fibre SMF structurant les réseaux actuels par une fibre MCF ou FMF.

Les demandes de brevet US 2009/080470 A1 et US 2015/098697 A1 décrivent des systèmes couplant plusieurs fibres en entrée à une seule en sortie, qui présentent des limitations. Dans la première demande de brevet, une seule fibre en entrée peut transmettre des données, les autres étant utilisées pour des signaux de pompe. Dans la deuxième demande de brevet, des contraintes existent sur les modes de transmission dans la fibre de sortie.

Un des buts de l'invention est de remédier à ces inconvénients de l'état de la technique.

### 3. Exposé de l'invention

L'invention vient améliorer la situation à l'aide d'un procédé d'insertion tel que défini dans la revendication 1.

En utilisant comme structure de guidage à la fois le cœur, la gaine et le revêtement de la fibre de sortie, même si ces éléments présentent des indices de réfraction différents, le procédé d'insertion tel que proposé permet d'insérer dans une même fibre de sortie un nombre de faisceaux optiques supérieur, par rapport à la technique antérieure. En modulant ces faisceaux optiques avec des données à transmettre, il est donc possible de d'augmenter la capacité de transmission d'un système de communication utilisant une fibre optique.

Selon un aspect du procédé d'insertion, la fibre optique de sortie est une fibre monomode, dite SMF, dont la gaine est dans une zone de la section de la fibre par exemple comprise entre un diamètre intérieur d'environ 8 µm et un diamètre extérieur d'environ 125 µm.

Selon un aspect du procédé d'insertion, la fibre optique de sortie est une fibre faiblement multimode, dite FMF, dont la gaine est dans une zone de la section de la fibre par exemple comprise entre un diamètre intérieur d'environ 16 µm et un diamètre extérieur d'environ 125 µm.

Selon un aspect du procédé d'insertion, la fibre optique de sortie est une fibre multimode, dite MCF, dont la gaine est dans une zone de la section de la fibre par exemple comprise entre un diamètre intérieur d'environ 50 µm ou d'environ 62,5 µm, et un diamètre extérieur d'environ 125 µm.

Selon un aspect, le procédé d'insertion comprend, préalablement à l'étape d'obtention de la pluralité de faisceaux optiques, une étape d'extraction des faisceaux optiques à partir d'une pluralité de fibres optiques.

Grâce à cet aspect, plusieurs systèmes de communication optique utilisant chacun une fibre peuvent être combinés et mélangés sur une seule fibre optique de sortie. Les fibres optiques des systèmes à combiner peuvent être des fibres SMF, FMF ou MCF.

Selon un aspect du procédé d'insertion, une partie au moins des faisceaux optiques extraits subissent chacun une transformation par application d'un mode spatial multimodal respectif, préalablement à l'étape d'insertion dans la fibre optique de sortie.

Grâce à cet aspect, certains des faisceaux optiques combinés et mélangés sur la seule fibre de sortie peuvent provenir de systèmes de communication optique monomode. Autrement dit, grâce à des transformations par application d'un mode spatial multimodal, l'avantage du procédé est obtenu même si un grand nombre de faisceaux optiques sont initialement monomodes.

Selon un aspect du procédé d'insertion, les fibres optiques desquelles les faisceaux optiques sont extraits sont des fibres optiques monomodes.

Ainsi, plusieurs systèmes de communication optique utilisant chacun une fibre monomode peuvent être combinés et mélangés sur une seule fibre de sortie. Autrement dit, l'avantage du procédé est obtenu même si tous les faisceaux optiques extraits sont initialement monomodes.

Selon un aspect du procédé d'insertion, au moins une des fibres optiques desquelles des faisceaux optiques sont extraits est une fibre multimode ou faiblement multimode.

Grâce à cet aspect, certains des faisceaux optiques combinés et mélangés sur la seule fibre de sortie peuvent provenir de systèmes de communication optique multimode ou faiblement multimode. Ainsi, il est possible d'accepter en entrée des fibres MCF ou FMF dont les faisceaux sont déjà multimodaux et ne requièrent pas de transformation par application d'un mode spatial multimodal.

Autrement dit, l'avantage du procédé d'insertion est aussi obtenu si tous les faisceaux optiques, ou si une partie seulement des faisceaux optiques extraits, sont initialement multimodes ou faiblement multimodes.

Selon un aspect du procédé d'insertion, la fibre optique de sortie est une fibre optique monomode, une fibre optique faiblement multimode, ou une fibre optique multimode.

Ainsi, le procédé d'insertion proposé s'applique à tous les systèmes de communication optique existants basés sur une fibre optique.

Les différents aspects du procédé d'insertion qui viennent d'être décrits peuvent être mis en œuvre indépendamment les uns des autres ou en combinaison les uns avec les autres.

L'invention concerne encore un dispositif d'insertion tel que défini dans la revendication 9.

Selon un aspect du dispositif d'insertion, le dispositif d'insertion comprend en outre:
- une pluralité de récepteurs optiques configurés pour recevoir des faisceaux optiques depuis une pluralité de fibres optiques, en amont du mélangeur optique,
- au moins un transformateur de mode spatial, configuré pour modifier la distribution de l'amplitude électromagnétique radiale et angulaire d'un faisceau optique, entre un des récepteurs optiques et le mélangeur optique.

Selon un aspect du dispositif d'insertion, la fibre optique de sortie est une fibre monomode.

Selon un aspect du dispositif d'insertion, la fibre optique de sortie est une fibre faiblement multimode.

Selon un aspect du dispositif d'insertion, la fibre optique de sortie est une fibre multimode.

Ce dispositif d'insertion, apte à mettre en œuvre dans tous ses modes de réalisation le procédé d'insertion qui vient d'être décrit, est destiné à être mis en œuvre dans un équipement de transmission sur fibre optique.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente une vue en section d'un exemple de fibre monomode utilisée comme structure de guidage de la lumière par le procédé selon l'invention,
- les figures 2a à 2k illustrent pour différents modes spatiaux des distributions en deux dimensions de l'intensité du signal optique sur la section de la fibre monomode, en fonction d'une amplitude électromagnétique radiale et angulaire,
- la figure 3 présente un exemple de dispositif d'insertion d'une pluralité de faisceaux optiques dans une fibre optique monomode, selon un aspect de l'invention.
- la figure 4 présente un autre exemple de dispositif d'insertion d'une pluralité de faisceaux optiques dans une fibre optique monomode, selon un aspect de l'invention.

### 5. Description détaillée d'au moins un mode de réalisation de l'invention

Dans la suite de la description, on présente des exemples de plusieurs modes de réalisation de l'invention se basant sur une fibre optique de sortie monomode, mais l'invention s'applique également à d'autres types de fibre optiques en sortie, telles qu'une fibre faiblement multimode ou une fibre multimode.

Le principe du procédé et du dispositif proposés est de réutiliser la structure de la fibre de sortie pour propager plus de modes que dans la technique antérieure, chaque mode constituant un canal de transmission distinct. A cette fin, et allant à l'encontre des préjugés de l'homme de métier, l'ensemble composé du cœur, de la gaine et de l'enveloppe de la fibre de sortie est utilisé comme structure de guidage.

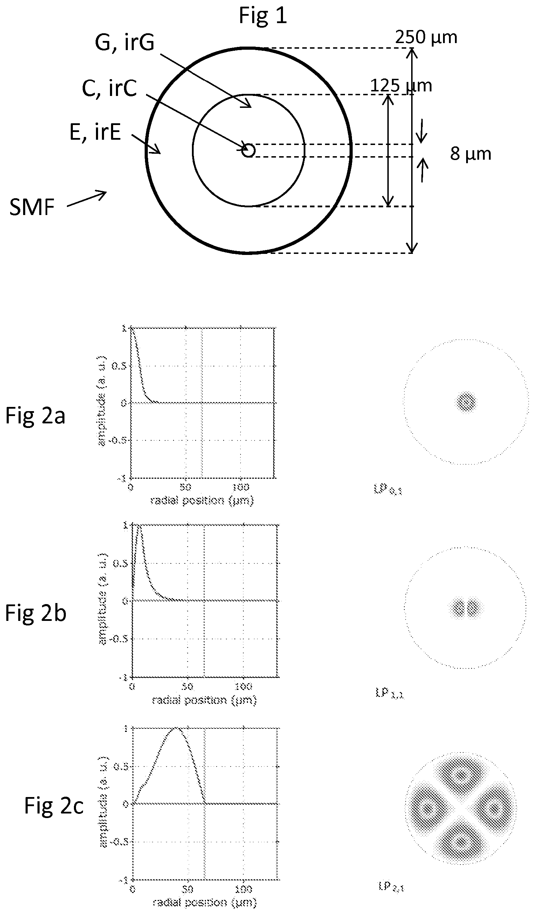

La **figure** 1 présente une vue en section d'un exemple de fibre monomode utilisée comme structure de guidage de la lumière par le procédé selon l'invention.

La structure de la fibre monomode SMF est circulaire avec :
- un cœur C d'environ 8 µm de diamètre avec un verre d'indice de réfraction irC d'environ 1.442 à 1300 nm
- une gaine G de 125 µm de diamètre avec un verre d'indice de réfraction irG d'environ 1.440 à 1300 nm
- un revêtement E de de diamètre 250 µm avec un polymère d'indice de réfraction irE entre 1.25 et 1.55 à 980nm.

Le principe est donc d'utiliser les deux structures en verre que sont le cœur et la gaine comme le nouveau cœur de guidage multimodal. Le revêtement a maintenant un rôle de nouvelle gaine pour au moins certains des modes spatiaux.

Les **figures 2a à 2k** illustrent pour différents modes spatiaux des distributions en deux dimensions de l'intensité du signal optique sur la section de la fibre monomode SMF, en fonction d'une amplitude électromagnétique radiale et angulaire.

Ces distributions ont été obtenues par simulation mathématique, pour la structure de guidage avec les dimensions et les indices de réfraction tels que décrits en référence à la figure 1, mais d'autres dimensions et indices de réfraction sont envisageables.

Pour chacune des figures 2a à 2k, le graphe de gauche représente la distribution radiale de la lumière, autrement dit son amplitude en fonction de l'éloignement du centre de la fibre. L'image de droite représente la distribution résultante de la lumière dans une coupe en section en deux dimensions de la fibre optique SMF. La distribution angulaire est le nombre de "tâches" par anneaux; ceci est visible dans l'image de droite et n'est pas représenté par un graphe.

Le premier mode de propagation, illustré par la figure 2a, est le mode de propagation naturel de la fibre monomode, nommé LP0,1 , dont le pic d'intensité de la lumière est concentré dans le cœur de la fibre.

La figure 2b illustre le mode LP1,1 où 2 pics maximaux d'intensité de la lumière sont présents dans la gaine, de part et d'autre du cœur.

La figure 2c illustre le mode LP2,1 où 4 pics maximaux d'intensité de la lumière sont présents dans la gaine, de part et d'autre du cœur.

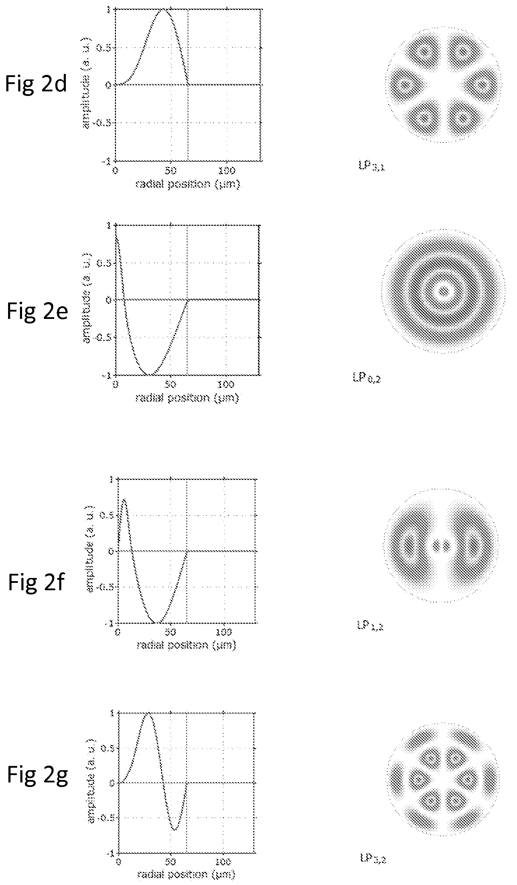

La figure 2d illustre le mode LP3,1 où 6 pics maximaux d'intensité de la lumière sont présents dans la gaine, de part et d'autre du cœur.

La figure 2e illustre le mode LP0,2 où 2 pics maximaux d'intensité de la lumière sont présents dans la gaine, sous la forme de 2 anneaux autour du cœur.

La figure 2f illustre le mode LP1,2 où 2 fois 2 pics maximaux d'intensité de la lumière sont présents dans la gaine, de part et d'autre du cœur.

La figure 2g illustre le mode LP3,2 où 2 fois 6 pics maximaux d'intensité de la lumière sont présents dans la gaine, répartis sur 2 anneaux autour du cœur.

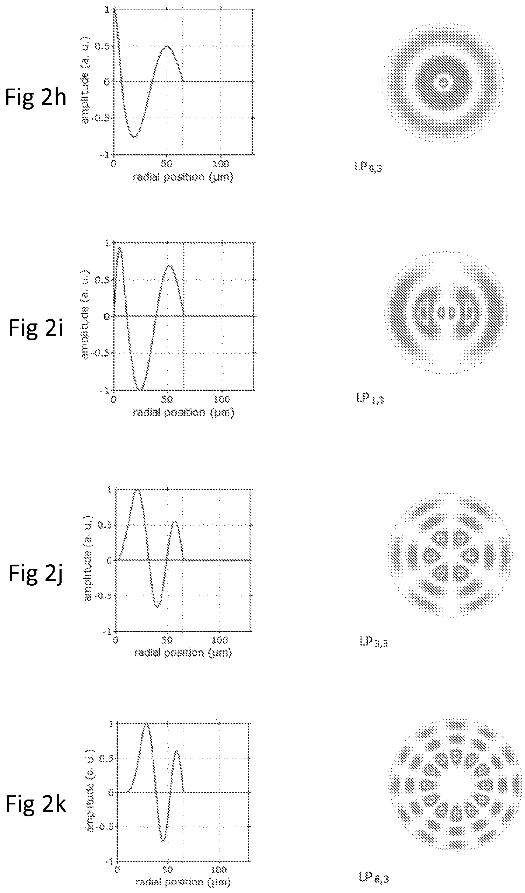

La figure 2h illustre le mode LP0,3 où 3 pics maximaux d'intensité de la lumière sont présents dans la gaine, sous la forme de 3 anneaux autour du cœur.

La figure 2i illustre le mode LP1,3 où 3 fois 2 pics maximaux d'intensité de la lumière sont présents dans la gaine, de part et d'autre du cœur.

La figure 2j illustre le mode LP3,3 où 3 fois 6 pics maximaux d'intensité de la lumière sont présents dans la gaine, répartis sur 3 anneaux autour du cœur.

La figure 2k illustre le mode LP6,3 où " fois 12 pics maximaux d'intensité de la lumière sont présents dans la gaine, répartis sur 3 anneaux autour du cœur.

On peut donc observer que la structure de guidage selon l'invention est fortement multimode, avec pour chaque mode des caractéristiques de propagation propres. Le tableau ci-dessous présente ces caractéristiques pour les modes LPx,y des figures 2a à 2d, avec leur constante de propagation (beta), leur indice effectif (neff) pour une longueur d'onde de 1310 nm, leur aire effective (Aeff), et leur longueur d'onde de coupure (lambda) :

| x | y | beta | neff | Aeff | lambda |
|---|---|---|---|---|---|
| 0 | 1 | 5.84237 / µm | 1.441254 | 268.5 µm² | |
| 1 | 1 | 5.83836 / µm | 1.440265 | 386.3 µm² | 79355.21 nm |
| 2 | 1 | 5.83676 / µm | 1.439871 | 5941.8 µm² | 50125.58 nm |
| 3 | 1 | 5.83647 / µm | 1.439800 | 5698.0 µm² | 37400.37 nm |

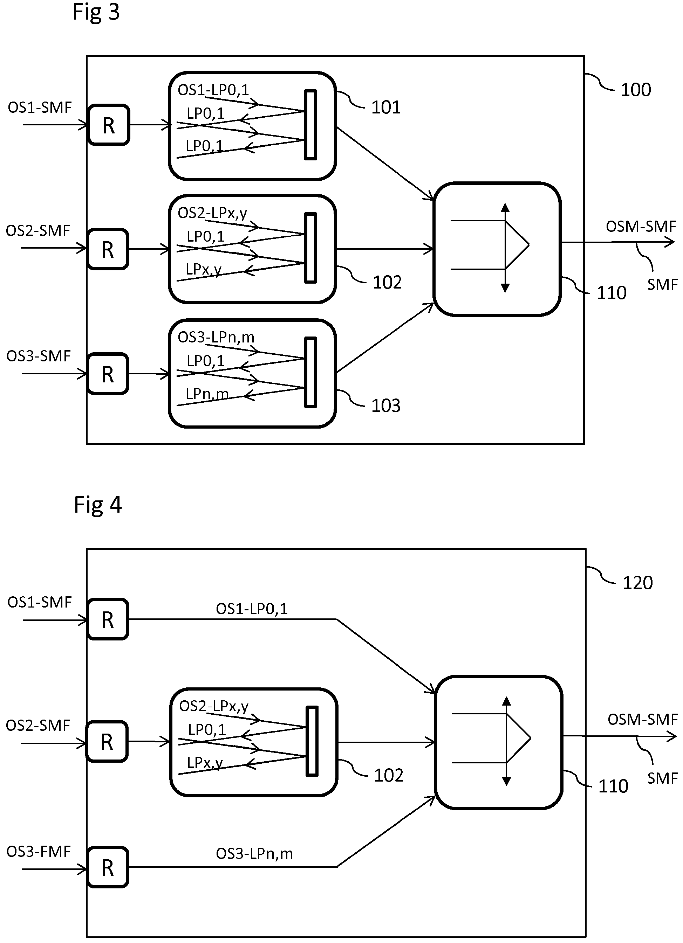

La **figure 3** présente un exemple de dispositif d'insertion d'une pluralité de faisceaux optiques dans une fibre optique monomode, selon un aspect de l'invention.

Le dispositif 100 comprend, au minimum, un mélangeur 110 qui accepte en entrée une pluralité de faisceaux optiques, et produit en sortie un faisceau optique résultant OSM-SMF qui est inséré dans une fibre optique monomode de sortie. Une particularité du mélangeur est qu'au moins un faisceau optique reçu en entrée est multimodal, c'est-à-dire qu'au moins un de ces faisceaux optiques présente une distribution de son amplitude électromagnétique radiale et angulaire avec un pic d'amplitude maximale qui est positionné dans la gaine de la fibre optique monomode de sortie SMF, et non dans son cœur.

Le mélangeur 110 mélange les faisceaux optiques en entrée sans modifier leur distribution spatiale et insère le faisceau optique résultant OSM-SMF du mélange dans la fibre optique monomode SMF.

Le dispositif 100 peut se limiter au mélangeur 110, mais avantageusement, il peut comprendre également des récepteurs optiques R et des transformateurs de profil lumineux 101, 102, 103.

Des faisceaux optiques OS1-SMF, OS2-SMF, OS3-SMF sont obtenus par exemple par les récepteurs optiques R à partir de fibres monomodes.

Les transformateurs de profil lumineux sont des composants optiques configurés pour modifier la distribution radiale et angulaire d'un faisceau optique, recevant respectivement un des faisceaux optiques extraits OS1-SMF, OS2-SMF, OS3-SMF pour les transformer respectivement en les faisceaux OS1-LP0,1 , OS2-LPx,y , OS3-LPn,m. De tels transformateurs 101, 102, 103 sont connus et sont par exemple des convertisseurs de lumière muti-plans, ou MPLC (multi-plane light converter) basés sur une modification de la phase optique.

Un composant MPLC transforme un faisceau entrant monomode, c'est-à-dire un faisceau dont l'énergie est concentrée au centre du milieu optique, en un faisceau sortant multiple, dont l'énergie est distribuée à plusieurs endroits du milieu optique. Chaque distribution est caractérisée par une amplitude radiale et angulaire notée LPx,y , telle que celles illustrées par les figures 2b à 2k, où x indique le nombres de pics d'énergie distincts sur un demi-cercle autour du centre, et y indique le nombre d'anneaux comprenant les pics d'énergie.

La **figure 4** présente un exemple de dispositif d'insertion d'une pluralité de faisceaux optiques dans une fibre optique monomode, selon un autre aspect de l'invention.

Le dispositif 120 diffère du dispositif 100 en ce qu'il peut livrer au mélangeur 110 certains faisceaux sans les modifier par rapport à leur état en entrée du dispositif, comme par exemple le faisceau OS1-SMF et le faisceau OS3-FMF, et certains autres faisceaux après les avoir transformés, comme par exemple le faisceau OS2-SMF transformé en le faisceau OS2-LPx,y.

Le faisceau OS1-SMF est reçu par un récepteur R dans le dispositif, depuis une fibre SMF (monomode), et est déjà dans un mode spatial LP0,1 . Ce faisceau est donc livré sans transformation au mélangeur 110.

Le faisceau OS3-FMF est reçu par un récepteur R dans le dispositif depuis une fibre FMF (faiblement multimode), et est déjà dans un mode spatial LPn,m . Ce faisceau est donc livré sans transformation au mélangeur 110.

On comprend qu'un grand nombre de configurations sont envisageables pour le dispositif 120. Il peut accepter en entrée soit uniquement des fibres SMF, comme le dispositif 100, ou bien n'importe quelle combinaison de fibres SMF, FMF, ou MCF.

Les exemples de dispositifs illustrés par les figures 3 et 4 sont basés sur 3 faisceaux optiques en entrée du mélangeur, mais n'importe quel nombre de faisceaux optique en entrée est envisageable, supérieur ou inférieur à 3.

De même, le dispositif d'insertion selon l'invention peut être réalisé avec une seule fibre MCF avec plusieurs faisceaux en entrée: par exemple des faisceaux monomodes et/ou multimodes, ou une combinaison des 2 types de faisceau, que le mélangeur 110 insère, éventuellement après transformation, dans une fibre SMF.

Grâce au dispositif d'insertion 100 ou 120 selon l'invention, le nombre de canaux de transmission de données que peut transporter la fibre SMF de sortie est égale à la somme des modes présents dans les faisceaux transformés, ou en entrée pour les faisceaux déjà multimodaux. Les données à transmettre modulent une ou plusieurs longueurs d'onde à des polarisations différentes d'un faisceau optique. l'ensemble de ces faisceaux composent donc un canal de transmission multiple composé des "n" faisceaux et des "l" longueurs d'onde à "p" état de polarisation. Les composants pour effectuer cette modulation optoéletronique sont par exemple des modulateurs externes de type Mach-Zehnder ou des sources laser modulées directement.

La fibre optique de sortie SMF utilisée comme exemple dans les figures peut être remplacée par une fibre faiblement multimode, dite FMF, ou par une fibre multimode, dite MCF. Grâce à l'invention il est donc possible d'augmenter la capacité de transmission d'une fibre optique en place sans la remplacer, qu'elle soit de type SMF, FMF ou MCF.

## Revendications

1. **Procédé** d'insertion d'une pluralité de faisceaux optiques, modulés avec des données, dans une fibre optique de sortie dont la structure de guidage est composée d'un cœur avec un premier indice de réfraction, d'une gaine avec un second indice de réfraction, et d'un revêtement avec un troisième indice de réfraction, les premier, second et troisième indices étant différents, le procédé comprenant les étapes suivantes :
• obtention de la pluralité de faisceaux optiques,
• transformation d'une partie au moins des faisceaux optiques par application d'un mode spatial multimodal respectif, résultant en ce qu'au moins un des faisceaux optiques présente dans la fibre optique de sortie une distribution de son amplitude électromagnétique radiale et angulaire avec un pic d'amplitude maximale dans la gaine,
• insertion des faisceaux optiques par mélange dans la fibre optique de sortie.

2. **Procédé** d'insertion selon la revendication 1, comprenant, préalablement à l'étape d'obtention de la pluralité de faisceaux optiques, une étape d'extraction des faisceaux optiques à partir d'une pluralité de fibres optiques.

3. **Procédé** d'insertion selon la revendication 2, où les fibres optiques desquelles les faisceaux optiques sont extraits sont des fibres optiques monomodes.

4. **Procédé** d'insertion selon l'une des revendications 1 ou 2, où au moins une des fibres optiques desquelles des faisceaux optiques sont extraits est une fibre faiblement multimode.

5. **Procédé** d'insertion selon l'une des revendications 1 ou 2, où au moins une des fibres optiques desquelles des faisceaux optiques sont extraits est une fibre multimode.

6. **Procédé** d'insertion d'une pluralité de faisceaux optiques selon l'une des revendications 1 à 5, où la fibre optique de sortie est une fibre monomode (SMF).

7. **Procédé** d'insertion d'une pluralité de faisceaux optiques selon l'une des revendications 1 à 5, où la fibre optique de sortie est une fibre faiblement multimode.

8. **Procédé** d'insertion d'une pluralité de faisceaux optiques selon l'une des revendications 1 à 5 où la fibre optique de sortie est une fibre multimode.

9. **Dispositif** d'insertion d'une pluralité de faisceaux optiques, modulés avec des données, dans une fibre optique de sortie (SMF) dont la structure de guidage est composée d'un cœur (C) avec un premier indice de réfraction (irC), d'une gaine (G) avec un second indice de réfraction (irG), et d'un revêtement (E) avec un troisième indice de réfraction (irE), les premier, second et troisième indices étant différents, le dispositif comprenant :
• une pluralité de récepteurs optiques (R) configurés pour recevoir des faisceaux optiques (OS1-SMF, OS2-SMF, OS3-SMF; OS3-FMF) depuis une pluralité de fibres optiques, en amont d'au moins un transformateur de mode spatial (101, 102, 103) ;
• l'au moins un transformateur de mode spatial (101, 102, 103) en amont d'un mélangeur optique (110), configuré pour modifier la distribution de l'amplitude électromagnétique radiale et angulaire d'un faisceau optique, résultant en ce que au moins une distribution modifiée présente un pic d'amplitude maximale dans la gaine ;
• le mélangeur optique (110) configuré pour insérer dans la fibre optique de sortie la pluralité de faisceaux optiques (OS1-LP0,1 , OS2-LPx,y , OS3-LPn,m).

10. **Dispositif** d'insertion d'une pluralité de faisceaux optiques selon la revendication 9, où la fibre optique de sortie est une fibre monomode.

11. **Dispositif** d'insertion d'une pluralité de faisceaux optiques selon la revendication 9, où la fibre optique de sortie est une fibre faiblement multimode.

12. **Dispositif** d'insertion d'une pluralité de faisceaux optiques selon la revendication 9, où la fibre optique de sortie est une fibre multimode.

## Patentansprüche

1. **Verfahren** zum Einfügen einer Mehrzahl von optischen Strahlen, die mit Daten moduliert sind, in eine optische Ausgangsfaser, deren Führungsstruktur aus einem Kern mit einem ersten Brechungsindex, einer Umhüllung mit einem zweiten Brechungsindex und einem Mantel mit einem dritten Brechungsindex zusammengesetzt ist, wobei der erste, zweite und dritte Index unterschiedlich sind, wobei das Verfahren die folgenden Schritte umfasst:
• Erhalten der Mehrzahl von optischen Strahlen,
• Umwandeln mindestens eines Teils der optischen Strahlen durch Anwenden einer jeweiligen multimodalen räumlichen Mode, was dazu führt, dass mindestens einer der optischen Strahlen in der optischen Ausgangsfaser eine Verteilung seiner radialen und winkligen elektromagnetischen Amplitude mit einem maximalen Amplitudenpeak in der Umhüllung aufweist,
• Einfügen der optischen Strahlen durch Einmischen in die optische Ausgangsfaser.

2. **Verfahren** zum Einfügen nach Anspruch 1, umfassend vor dem Schritt des Erhaltens der Mehrzahl von optischen Strahlen einen Schritt des Extrahierens der optischen Strahlen aus einer Mehrzahl von optischen Fasern.

3. **Verfahren** zum Einfügen nach Anspruch 2, wobei die optischen Fasern, aus denen die optischen Strahlen extrahiert werden, optische Singlemode-Fasern sind.

4. **Verfahren** zum Einfügen nach einem der Ansprüche 1 oder 2, wobei mindestens eine der optischen Fasern, aus denen optische Strahlen extrahiert werden, eine Few-Mode-Faser ist.

5. **Verfahren** zum Einfügen nach einem der Ansprüche 1 oder 2, wobei mindestens eine der optischen Fasern, aus denen optische Strahlen extrahiert werden, eine Multimode-Faser ist.

6. **Verfahren** zum Einfügen einer Mehrzahl von optischen Strahlen nach einem der Ansprüche 1 bis 5, wobei die optische Ausgangsfaser eine Singlemode-Faser (SMF) ist.

7. **Verfahren** zum Einfügen einer Mehrzahl von optischen Strahlen nach einem der Ansprüche 1 bis 5, wobei die optische Ausgangsfaser eine Few-Mode-Faser ist.

8. **Verfahren** zum Einfügen einer Mehrzahl von optischen Strahlen nach einem der Ansprüche 1 bis 5, wobei die optische Ausgangsfaser eine Multimode-Faser ist.

9. **Vorrichtung** zum Einfügen einer Mehrzahl von optischen Strahlen, die mit Daten moduliert sind, in eine optische Ausgangsfaser (SMF), deren Führungsstruktur aus einem Kern (C) mit einem ersten Brechungsindex (irC), einer Umhüllung (C) mit einem zweiten Brechungsindex (irG) und einem Mantel (E) mit einem dritten Brechungsindex (irE) zusammengesetzt ist, wobei der erste, zweite und dritte Index unterschiedlich sind, die Vorrichtung umfassend:
• eine Mehrzahl von optischen Empfängern (R), die dazu ausgelegt sind, optische Strahlen (OS1-SMF, OS2-SMF, OS3-SMF; OS3-FMF) von einer Mehrzahl von optischen Fasern zu empfangen, stromauf mindestens eines Transformators für räumliche Moden (101, 102, 103);
• mindestens einen Transformator für räumliche Moden (101, 102, 103) stromauf eines optischen Mischers (110), der dazu ausgelegt ist, die Verteilung der radialen und winkligen elektromagnetischen Amplitude eines optischen Strahls zu modifizieren, was dazu führt, dass mindestens eine modifizierte Verteilung einen maximalen Amplitudenpeak in der Umhüllung aufweist;
• den optischen Mischer (110), der dazu ausgelegt ist, in die optische Ausgangsfaser die Mehrzahl von optischen Strahlen (OS1-LP0,1 , OS2-LPx,y , OS3-LPn,m) einzufügen.

10. **Vorrichtung** zum Einfügen einer Mehrzahl von optischen Strahlen nach Anspruch 9, wobei die optische Ausgangsfaser eine Singlemode-Faser ist.

11. **Vorrichtung** zum Einfügen einer Mehrzahl von optischen Strahlen nach Anspruch 9, wobei die optische Ausgangsfaser eine Few-Mode-Faser ist.

12. **Vorrichtung** zum Einfügen einer Mehrzahl von optischen Strahlen nach Anspruch 9, wobei die optische Ausgangsfaser eine Multimode-Faser ist.

## Claims

1. Method for injecting a plurality of optical beams, modulated with data, into an output optical fibre the guiding structure of which is composed of a core with a first refractive index, of a cladding with a second refractive index, and of a sheath with a third refractive index, the first, second and third indices being different, the method comprising the following steps:
• obtaining the plurality of optical beams,
• converting some at least of the optical beams by applying a respective multimodal spatial mode, resulting in at least one of the optical beams having in the output optical fibre a distribution of its radial and angular electromagnetic amplitude with a maximum amplitude peak in the cladding,
• injecting the optical beams by mixing into the output optical fibre.

2. Injecting method according to Claim 1, comprising, prior to the step of obtaining the plurality of optical beams, a step of extracting the optical beams from a plurality of optical fibres.

3. Injecting method according to Claim 2, wherein the optical fibres from which the optical beams are extracted are single-mode optical fibres.

4. Injecting method according to either of Claims 1 and 2, wherein at least one of the optical fibres from which the optical beams are extracted is a few-mode fibre.

5. Injecting method according to either of Claims 1 and 2, wherein at least one of the optical fibres from which the optical beams are extracted is a multimode fibre.

6. Method for injecting a plurality of optical beams according to any of Claims 1 to 5, wherein the output optical fibre is a single-mode fibre (SMF).

7. Method for injecting a plurality of optical beams according to any of Claims 1 to 5, wherein the output optical fibre is a few-mode fibre.

8. Method for injecting a plurality of optical beams according to any of Claims 1 to 5, wherein the output optical fibre is a multimode fibre.

9. Device for injecting a plurality of optical beams, modulated with data, into an output optical fibre (SMF) the guiding structure of which is composed of a core (C) with a first refractive index (irC), of a cladding (G) with a second refractive index (irG), and of a sheath (E) with a third refractive index (irE), the first, second and third indices being different, the device comprising:
• a plurality of optical receivers (R) configured to receive optical beams (OS1-SMF, OS2-SMF, OS3-SMF; OS3-FMF) from a plurality of optical fibres, upstream of at least one spatial-mode converter (101, 102, 103);
• the at least one spatial-mode converter (101, 102, 103) upstream of an optical mixer (110), configured to modify the distribution of the radial and angular electromagnetic amplitude of an optical beam, resulting in at least one modified distribution having a maximum amplitude peak in the cladding;
• the optical mixer (110) configured to insert the plurality of optical beams (OS1-LP0,1, OS2-LPx,y, OS3-LPn,m) into the output optical fibre.

10. Device for injecting a plurality of optical beams according to Claim 9, wherein the output optical fibre is a single-mode fibre.

11. Device for injecting a plurality of optical beams according to Claim 9, wherein the output optical fibre is a few-mode fibre.

12. Device for injecting a plurality of optical beams according to Claim 9, wherein the output optical fibre is a multimode fibre.
